# EUROPEAN PATENT SPECIFICATION

(11) **EP 2 692 312 B1**
(45) Date of publication and mention of the grant of the patent: **20.12.2017**
(21) Application number: 13176973.9
(22) Date of filing: 18.07.2013
(51) Int. Cl.: A61C 13/00, A61K 6/08, A61C 8/00

(54) **A semi-finished product for dental implants**
Halbfertigprodukt für Zahnimplantate
Produit semi-fini destiné à des implants dentaires

(30) Priority: 01.08.2012 IT MI20121359
(43) Date of publication of application: 05.02.2014
(73) Proprietor: Bioloren S.R.L., 21047 Saronno (Varese) (IT)
(72) Inventor: Ratti, Umberto, 21047 Saronno (Varese) (IT)
(74) Representative: Tarabbia, Luigi

(56) References cited:
- WO-A1-2010/109496
- WO-A1-2012/095878
- WO-A2-2006/039733
- DE-A1-102006 051 294
- US-A1- 2006 208 393

## Description

The object of the present invention is a semi-finished product for dental implants, particularly of the type made of a composite material. This semi-finished product is used to make dental posts, abutments or crowns.

The use of composite materials is known in the fields of dentistry and dental laboratory technology for making objects or devices for dental implants, that is, in cases in which artificial reconstruction of an operated tooth is necessary. Pins or abutments (endosseous or endodontic) are objects/devices commonly made for this purpose; dental crowns reproducing the original shape of the tooth prior to dental laboratory intervention, are subsequently mounted on these posts or abutments.

The composite materials comprise a polymeric matrix in which fibres of high mechanical strength are embedded. Generally, these composite materials have resistant fibres of an elongated and continuous shape, more particularly the fibres are arranged in a mutually parallel condition. Some examples of these composite materials can be found in the document US 2006/208393A1 showing a formable fibre-reinforced composite with longitudinally extending fibresdirected to prevent fraying (delamination) of the fiber reinforced unidirectional composite product maintaining sufficient strength of the product, and the document WO 2012/095878A1, showing a semi-worked piece of composite material for dental implants capable of withstanding stresses caused by the mechanical workings for making dental posts and/or stumps having a fibres disposed in a matrix portion along a bi-dimensional extension path to solve the problem related to the heterogeneous behavior of the composite materials for dental use.

WO2010/109496 disclose an example of a semi-worked piece of composite material for dental use having a multiplicity of resistant fibres nested in a polymeric matrix.

Given the uniqueness of dental laboratory cases which require rebuilding with dental posts or abutments, the latter cannot be mass-produced. Thus dental laboratory technicians generally start from a semi-finished product like the product according to the present invention, and submit it to mechanical machining, to turning and/or milling procedures for example, so as to obtain the specific post or abutment.

Disadvantageously, the posts, abutments and crowns made in this manner require numerous subsequent machining procedures in order to make the dental implants. Specifically, a post must be coated with a material having surface properties (both optical and hardness/resilience properties) similar to those of human teeth. This requires a long work process, which produces a considerable increase in the cost of implants, given that the work process is necessarily assigned to skilled personnel.

In this context, the technical task underlying the present invention is to offer a semi-finished product for dental implants that overcomes the drawbacks of the prior art cited hereinabove. Specifically, the aim of the present invention is to make available a semi-finished product for dental implants that makes it possible to make the implants with limited time and cost. The defined technical task and the specified aims are substantially achieved by a semi-finished product for dental implants, comprising the technical
characteristics according to claim 1.

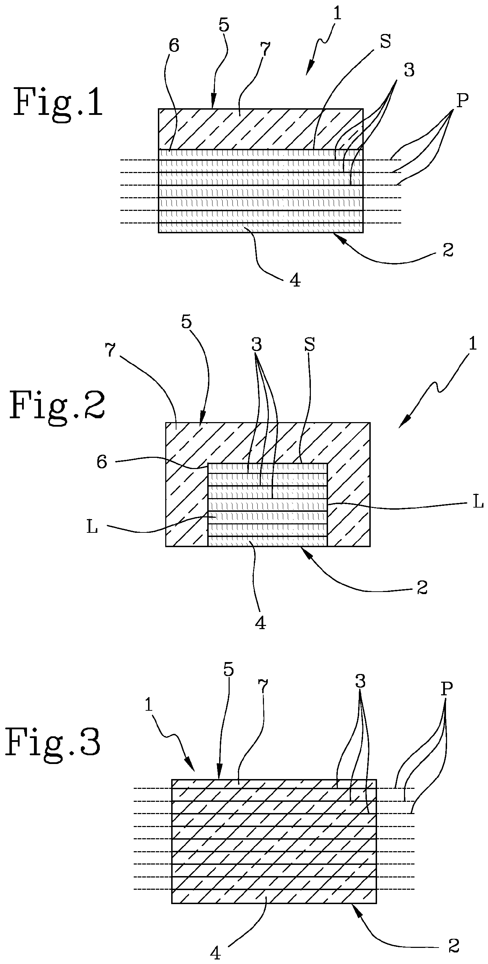

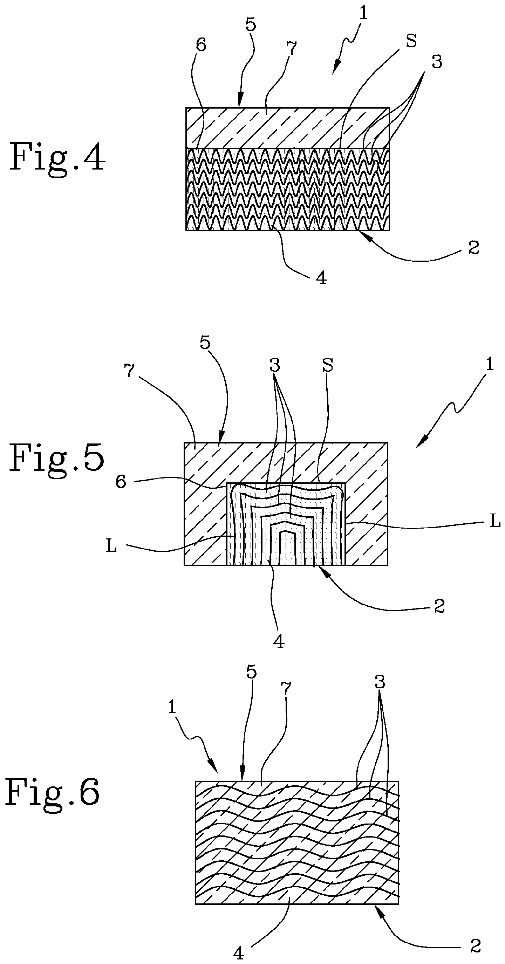

Further characteristics and advantages of the present invention will emerge more clearly from the description of a preferred, but not exclusive embodiment of a semi-finished product for dental implants, as illustrated in the attached drawings. Specifically, Figures 1 to 7 are schematic lateral cross-sectional views of a semi-finished product for dental implants, in respective embodiments thereof. With reference to the attached figures, 1 indicates a semi-finished product for dental implants. This semi-finished product 1 comprises at least one supporting layer 2 with structural functions. The supporting layer 2 comprises a plurality of supporting fibres 3 immersed in a matrix 4.

In further detail, the supporting fibres 3 are arranged in the form of a fabric, which may be "dry" or preimpregnated with the matrix 4. In an alternative embodiment of the invention, it is also possible to employ unidirectional fibres.

By way of example, the fibres 3 may be made of carbon, glass, aramid or other materials, as long as they have the structural properties and biocompatibility required for that particular application.

The matrix 4 is preferably of the polymeric type, for example a thermosetting or thermoplastic resin: in detail, possible examples of a matrix 4 include epoxy substances, vinyl ester, polyester, urethane plastics and polymers of organic origin in general. In alternative embodiments of the invention, other types of matrices 4, which are better illustrated in the following part of this description, are also possible. Within the supporting layer 2, a number of layers of supporting fibre 3 are superposed on each other and embedded in the matrix 4. Preferably, but not exclusively, the various layers of fibres 3 lie in lying planes "P" that are parallel with each other.

The fibre layers 3 may be spatially arranged in any manner in terms of topology/geometry, according to current needs: they may be arranged on surfaces which are planar (and parallel with each other, one over the other), or they may be undulating and/or curved, or in any case, non-planar (though capable, in this latter case, of remaining superposed on each other, with a certain spacing between one and the other surface).

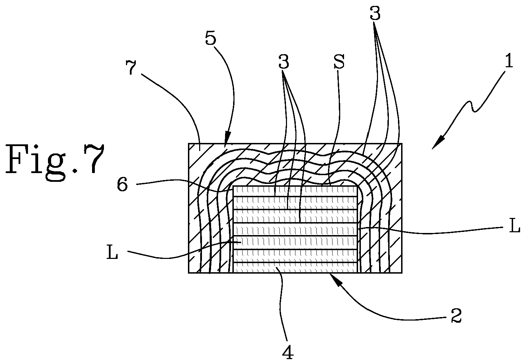

As concerns the possibility of the fibre layers 3 being in a non-planar configuration, it should be observed that non-planar and planar layers of fibres can coexist in the same semi-finished product 1, for example, in different parts of the semi-finished product: for example, it can be observed in Figure 7 that an inner core is constructed on a base of fibre layers 3 arranged on planar surfaces that are superposed on each other, while an outer layer, preferably having semi-transparent and/or polishable properties in accordance with the present invention, may be at least partially circumscribed to the inner core and is also constituted on a structure of fibre layers 3, having a non-planar geometry/topology disposition.

The example embodiment illustrated hereinabove offers the advantage of making the machining procedures to obtain an artificial tooth (or a crown) very easy and fast, making it possible to reach optimal structural strength of the polishable layer and preventing the finishing and/or polishing procedures from affecting the structural integrity of the fibre layers 3.

According to the invention, a polishable and/or semi-transparent layer 5 is superposed on the supporting layer 2. For the purposes of the present invention, the term "semi-transparent" is intended as a layer 5 that is partially permeable to light radiation, so that it exhibits (possibly by virtue of a polishing procedure) an appearance comparable to that of the surface of a normal human tooth; at the same time, the term "polishable" is intended as referring to a layer 5 that can undergo surface finishing procedures such as to confer a finished appearance thereto that is comparable to that of a biological human tooth, both in terms of surface roughness, and hardness/resilience, and light reflectance/absorption. An example of such a material may include zirconium oxide (ZrO₂) or lithium disilicate (Li₂Si₂O₅), which thus proves to be suited to the realisation of the semi-reflective layer 5:advantageously, this layer/material allows for realisation of the artificial tooth together with the post, thereby considerably simplifying installation of the implant.

In further detail, the polishable and/or semi-transparent layer 5 comprises a further matrix 7 that is preferably of the polymeric and/or ceramic type. In other words, the further matrix 7 defines the optical properties of the semi-transparent and/or polishable layer 5 and, according to the present invention, it is preferably made of a material having properties typical of ceramic materials, such as zirconium oxide for example.

To give the layer 5 greater structural strength, it may comprise a plurality of pieces (unillustrated) of fibre. In other words, these pieces of fibre may be made with the same material as the supporting fibres 3, or with a different material. These pieces of fibre are of much shorter lengths than those of the supporting fibres 3; more specifically, they range between 5 microns and 15 millimetres in length.

Unlike the supporting fibres 3, the pieces of fibre are not necessarily arranged in a single lying plane. In other words, the pieces of fibre can be arranged in the semi-transparent and/or polishable layer 5 with a random orientation. Lastly, note that the pieces of fibre define a so-called "matting" that serves to reinforce the further matrix 7 structurally and to give improved structural properties to the layer 5.

Various embodiments of the invention are possible, some of which are illustrated in the attached figures. Specifically, in the embodiment of the invention that is schematised in Figure 1, the semi-reflective layer 5 is distinct and superposed on the supporting layer 2. In other words, the layer 5 covers the supporting layer 2 at least at a main surface "S" preferably parallel with the lying plane "P" of the supporting fibres 3. In further detail, as shown in Figure 1, there is an interface surface 6 between the supporting layer 2 and the layer 5.

As shown in Figure 2, the layer 5 can optionally extend along at least two lateral surfaces "L" which are parallel with one another and perpendicular to the main surface "S". In this case, the interface surface 6 extends along the lateral surfaces "L".

In further embodiments of the invention, there is a possibility to arrange a layer of binder material between the supporting layer 2 and the layer 5. Specifically, the layer of binder material is placed at the interface surface 6. Preferably, this binder material may be made up of resinous and/or epoxy and/or polymeric and/or urethane and/or silane cements.

As illustrated in Figure 3, there is a possible alternative embodiment (not claimed) in which the supporting layers 2 and the semi-transparent and/or polishable layer 5 can no longer be distinguished from each other, but they coincide. In other words, the supporting layer 2 is made in one piece with said layer 5. In this case, the matrix 4 for the supporting layer 2 and the further matrix 7 are made of the same material.

In a further embodiment of the invention, which is not illustrated, the semi-finished product 1 may comprise a reinforcing jacket. This reinforcing jacket comprises reinforcing fibres embedded at least in the matrix 4 and angled relative to the lying plane "P" of the supporting fibres 3. This reinforcing jacket presents a looped section in the lying planes "P" of the supporting fibres 3. In other words, the reinforcing jacket encloses at least the supporting layer 2 (and optionally the layer 5) so as to give the semi-finished product 1 greater resistance to mechanical stress along a direction perpendicular to the lying planes "P" of the fibres 4.

The present invention achieves the proposed aims. In fact, the realisation of the implant proves to be very easy starting from the semi-finished product, in that the artificial tooth is already pre-installed on the abutment, and only requires finishing touches. As a result, the time needed for realising the single implant, and the costs thereof, will be markedly reduced.

## Claims

1. A semi-finished product (1) for dental implants, comprising at least one supporting layer (2) comprising a plurality of supporting fibres (3) immersed in a matrix (4), said supporting fibres (3) being arranged in the form of a fabric and disposed on surfaces which are planar and parallel with each other, or undulating and/or curved in the space, said surfaces being arranged in such a way that they are superposed on each other; **characterised in that** the semi-finished product (1) further comprises at least one semi-transparent and/or polishable layer (5) which is superposed on said at least one supporting layer (2), said semi-transparent and/or polishable layer (5) covering said at least one supporting layer (2) at least at a main surface (S) and at least at two lateral surfaces (L) which are parallel with one another and perpendicular to said main surface (S), said semi-transparent and/or polishable layer (5) comprising a further matrix (7) of the polymeric and/or ceramic type.

2. The semi-finished product (1) for dental implants according to the preceding claim, **characterised in that** said further matrix (7) is made of the same material as said matrix (4).

3. The semi-finished product (1) for dental implants according to any of the preceding claims, **characterised in that** said semi-transparent and/or polishable layer (5) comprises a plurality of pieces of fibre.

4. The semi-finished product (1) for dental implants according to any of the preceding claims, **characterised in that** said supporting layer (2) is made in one piece with said semi-transparent and/or polishable layer (5).

5. The semi-finished product (1) for dental implants according to any of the claims from 1 to 3, **characterised in that** it comprises a binder layer between said supporting layer (2) and said semi-transparent and/or polishable layer (5).

6. The semi-finished product (1) for dental implants according to any of the preceding claims, **characterised in that** it comprises a reinforcing jacket comprising reinforcing fibres embedded in at least said matrix (4) and angled relative to the lying planes (P) of the supporting fibres (3), said reinforcing jacket comprising a looped section in said lying planes (P).

7. The semi-finished product (1) for dental implants according to any of the preceding claims, **characterised in that** said supporting layer (2) is made of carbon and/or glass and/or quartz and/or silica and/or ceramic and/or polyethylene and/or polymeric fibres.

8. The semi-finished product (1) for dental implants according to any of the preceding claims, **characterised in that** said semi-transparent and/or polishable layer (5) is made of composite materials which are polymeric and/or ceramic and/or silicate and/or silicate-derived and/or polycarbonate and/or zirconium oxide and/or nano-components.

## Patentansprüche

1. Halbfertigprodukt (1) für Zahnimplantate, umfassend mindestens eine Stützschicht (2), umfassend eine Vielzahl an Stützfasern (3), eingebettet in eine Matrix (4), wobei die Stützfaser (3) in der Form eines Gewebes angeordnet und auf Oberflächen verteilt sind, die ebenflächig und parallel zueinander oder räumlich gewellt und/oder gekrümmt angeordnet sind, wobei diese Oberflächen so angeordnet sind, dass sie sich überlagern, **dadurch gekennzeichnet, dass** das Halbfertigprodukt (1) zudem mindestens eine halb durchsichtige und/oder polierbare Schicht (5) umfasst, die die mindestens eine Stützschicht (2) überlagert, wobei die halb durchsichtige und/oder polierbare Schicht (5) die mindestens eine Stützschicht (2) mindestens an einer Hauptoberfläche (S) und mindestens an zwei Seitenoberflächen (L), die parallel zueinander zueinander und lotrecht zur Hauptoberfläche (S) angeordnet sind, bedeckt, wobei die halb durchsichtige und/oder polierbare Schicht (5) eine weitere Matrix (7) vom polymerischen und/oder keramischen Typ umfasst.

2. Halbfertigprodukt (1) für Zahnimplantate nach dem vorhergehenden Anspruch, **dadurch gekennzeichnet, dass** die weitere Matrix (7) aus demselben Material wie die Matrix (4) besteht.

3. Halbfertigprodukt (1) für Zahnimplantate nach einem der vorhergehenden Ansprüche, **dadurch gekennzeichnet, dass** die halb durchsichtige und/oder polierbare Schicht (5) eine Vielzahl an Faserstücken umfasst.

4. Halbfertigprodukt (1) für Zahnimplantate nach einem der vorhergehenden Ansprüche, **dadurch gekennzeichnet, dass** die Stützschicht (2) aus einem Stück mit der halb durchsichtigen und/oder polierbaren Schicht (5) besteht.

5. Halbfertigprodukt (1) für Zahnimplantate nach einem der vorhergehenden Ansprüche 1 bis 3, **dadurch gekennzeichnet, dass** sie eine Bindeschicht zwischen der Stützschicht (2) und der halb durchsichtigen und/oder polierbaren Schicht (5) umfasst.

6. Halbfertigprodukt (1) für Zahnimplantate nach einem der vorhergehenden Ansprüche, **dadurch gekennzeichnet, dass** sie eine Verstärkungsummantelung umfasst, umfassend verstärkende Fasern, die mindestens in der Matrix (4) eingebettet und winkelig zu den liegenden Ebenen (P) der Stützfasern (3) angeordnet sind, wobei die Verstärkungsummantelung eine Schleifensektion in den liegenden Ebenen (P) umfasst.

7. Halbfertigprodukt (1) für Zahnimplantate nach einem der vorhergehenden Ansprüche, **dadurch gekennzeichnet, dass** die Stützschicht (2) aus Kohle- und/oder Glas- und/oder Quarz- und/oder Kieselsäure- und/oder Keramik- und/oder Polyethylen- und/oder Polymerfasern bestehen.

8. Halbfertigprodukt (1) für Zahnimplantate nach einem der vorhergehenden Ansprüche, **dadurch gekennzeichnet, dass** die halb durchsichtige und/oder polierbare Schicht (5) aus Verbundmaterialien besteht, bei denen es sich um Polymer- und/oder Keramik- und/oder Kieselsäure- und/oder Kieselsäurederivat- und/oder Polykarbonat- und/oder Zirkoniumoxid- und/oder Nanokomponenten handelt.

## Revendications

1. Produit semi-fini (1) destiné à des implants dentaires, comprenant au moins une couche de support (2) comprenant une pluralité de fibres de support (3) plongées dans une matrice (4), lesdites fibres de support (3) étant disposées sous forme d'un tissu et disposées sur des surfaces étant planaires et parallèles les unes aux autres, ou ondulées et/ou incurvées dans l'espace, lesdites surfaces étant disposées de manière à ce qu'elles soient superposées les unes aux autres ; **caractérisé en ce que** le produit semi-fini (1) comprend de plus au moins une couche semi-transparente et/ou polissable (5) étant superposée sur ladite au moins une couche de support (2), ladite couche semi-transparente et/ou polissable (5) recouvrant ladite au moins une couche de support (2) au moins en correspondance d'une surface principale (S) et au moins en correspondance de deux surfaces latérales (L) étant parallèles l'une à l'autre et perpendiculaires à ladite surface principale (S), ladite couche semi-transparente et/ou polissable (5) comprenant une matrice supplémentaire (7) de type polymère et/ou céramique.

2. Produit semi-fini (1) destiné à des implants dentaires selon la revendication précédente, **caractérisé en ce que** ladite matrice supplémentaire (7) est constituée du même matériau que ladite matrice (4).

3. Produit semi-fini (1) destiné à des implants dentaires selon l'une quelconque des revendications précédentes, **caractérisé en ce que** ladite couche semi-transparente et/ou polissable (5) comprend une pluralité de morceaux fibre.

4. Produit semi-fini (1) destiné à des implants dentaires selon l'une quelconque des revendications précédentes, **caractérisé en ce que** ladite couche de support (2) est réalisée en un seul tenant avec ladite couche semi-transparente et/ou polissable (5).

5. Produit semi-fini (1) destiné à des implants dentaires selon l'une quelconque des revendications de 1 à 3, **caractérisé en ce qu'**il comprend une couche de liant entre ladite couche de support (2) et ladite couche semi-transparente et/ou polissable (5).

6. Produit semi-fini (1) destiné à des implants selon l'une quelconque des revendications précédentes, **caractérisé en ce qu'**il comprend une enveloppe de renforcement comprenant des fibres de renforcement intégrées dans au moins ladite matrice (4) et inclinées par rapport aux plans de couche (P) des fibres de support (3), ladite enveloppe de renforcement comprenant une section en boucle dans lesdits plans de couche (P).

7. Produit semi-fini (1) destiné à des implants dentaires selon l'une quelconque des revendications précédentes, **caractérisé en ce que** ladite couche de support (2) est en fibre de carbone et/ou de verre et/ou de quartz et/ou de silice et/ou céramique et/ou de polyéthylène et/ou polymère.

8. Produit semi-fini (1) destiné à des implants dentaires selon l'une quelconque des revendications précédentes, **caractérisé en ce que** ladite couche semi-transparente et/ou polissable (5) est constituée de matériaux composites étant des polymères et/ou des céramiques et/ou des silicates et/ou des dérivés de silicate et/ou du polycarbonate et/ou de l'oxyde de zirconium et ou des nano-composants.
